# NEUE EUROPÄISCHE PATENTSCHRIFT

(11) **EP 1 085 716 B2**
(45) Veröffentlichungstag und Bekanntmachung des Hinweises auf die Entscheidung über den Einspruch: **03.10.2012**
(45) Hinweis auf die Patenterteilung: 21.06.2006
(21) Anmeldenummer: 00118545.3
(22) Anmeldetag: 25.08.2000
(51) Int. Cl.: H04L 29/06, H04L 12/56

(54) **Drahtloses Datenübertragungsverfahren unter Verwendung einer Kompressionsprotokollschicht**
Wireless data transmission using a compression protocol layer
Transmission sans fil de données utilisant une couche protocolaire de compression

(30) Priorität: 15.09.1999 DE 19944334
(43) Veröffentlichungstag der Anmeldung: 21.03.2001
(73) Patentinhaber: IPCom GmbH & Co. KG, 82049 Pullach (DE)
(72) Erfinder: Hans, Martin, 31141 Hildesheim (DE); Laumen, Josef, 31141 Hildesheim (DE); Schmidt, Gunnar, 38304 Wolfenbuettel (DE); Beckmann, Mark, 31789 Hameln (DE)
(74) Vertreter: Molnia, David

(56) Entgegenhaltungen:
- WO-A-96/21984
- WO-A-97/48212
- DE-A- 19 847 679
- 'Digital cellular telecommunications system (Phase 2+); General Packet Radio Service (GPRS); Mobile Station (MS) - Serving GPRS Support Node (SGSN); Subnetwork Dependent Convergence Protocol (SNDCP) (GSM 04.65 version 6.3.0 RELEASE 1997); TS101 297' IEEE Bd. 3-CN1, Nr. V6.3.0, 01 März 1999, LIS, SOHIA ANTIPOLIS CEDEX, FRANCE, XP014015978
- NTT DOCOMO: 'Header compression in L3CE' 3GPP DRAFT; R2-99578 Bd. RAN WG2, 19 Juli 1999, SOPHIA-ANTIPOLIS CEDEX ; FRANCE, XP050112920

## Beschreibung

### Stand der Technik

Die Erfindung geht von einem Verfahren zum Betreiben eines Mobilfunknetzes nach der Gattung des Hauptanspruch aus.

Aus der DE 198 47 679 A1 ist bereits ein solches Verfahren bekannt, das teilnetzabhängige Konvergenzprotokolle für Mobilfunknetze betrifft. Das dort beschriebene Verfahren ist insbesondere, jedoch nicht notwendigerweise auf das teilnetzabhängige Konvergenzprotokoll SNDCP (Subnetwork Dependent Convergence Protocol) anwendbar, wie es für GPRS (General Packet Radio Service = allgemeine Funkdienste mit Paketvermittlung) zu spezifizieren ist.

Aktuelle digitale Kleinzonen-Telefonsysteme wie GSM (Global System for Mobile communications = globales System für mobile Kommunikation) wurden mit dem Schwerpunkt auf Sprachkommunikation konzipiert. Daten werden zwischen einer Mobilstation (MS) und einem Basisstations-Untersystem (BSS) normalerweise unter Verwendung des sogenannten "leitungsvermittelten" Übertragungsmodus, bei dem ein physikalischer Kanal, d.h. eine Reihe regelmäßig beabstandeter Zeitschlitze, auf einer oder mehreren Frequenzen für die Dauer eines Anrufs reserviert ist, über die Luftschnittstelle übertragen. Für Sprachkommunikation, bei der der zu übertragende Informationsstrom relativ kontinuierlich ist, ist der leitungsvermittelte Übertragungsmodus annehmbar wirkungsvoll. Jedoch ist der Datenstrom während Datenanrufen, z.B. bei einem Zugriff auf das Internet "stoßweise", und eine Langzeitreservierung eines physikalischen Kanals stellt im Leitungsvermittlungsmodus einen unwirtschaftlichen Gebrauch der Luftschnittstelle dar. Unter der Voraussetzung, daß der Bedarf an Datendiensten durch digitale Kleinzonen-Telefonsysteme weiter schnell ansteigt, wird derzeit ein neuer, auf GSM beruhender Dienst, der als GPRS bekannt ist, vom ETSI (European Telecommunications Standards Institute) standardisiert, und er ist hinsichtlich Gesamtbegriffen in der Empfehlung GSM 03.60 definiert. GPRS sorgt für eine dynamische Zuordnung physikalischer Kanäle zur Datenübertragung. D.h., daß ein physikalischer Kanal einer speziellen MS-BSS-Übertragungsstrecke nur dann zugeordnet ist, wenn zu übertragende Daten vorliegen. Dadurch ist die überflüssige Reservierung physikalischer Kanäle vermieden, wenn keine zu übertragenden Daten vorliegen.

GPRS soll in Verbindung mit der herkömmlichen leitungsvermittelten GSM-Übertragung arbeiten, um die Luftschnittstelle sowohl für Daten- als auch Sprachkommunikation wirkungsvoll nutzen. GPRS wird daher die für die GSM definierte Grundkanalstruktur nutzen. Bei GSM wird ein vorgegebenes Frequenzband in der Zeitdomäne in eine Abfolge von Rahmen unterteilt, die als TDMA (Time Division Multiple Access = Zeitmultiplex-Vielfachzugriff)-Rahmen bekannt sind. Die Länge eines TDMA-Rahmes beträgt 4,615 ms. Jeder TDMA-Rahmen ist seinerseits in acht aufeinanderfolgende Schlitze gleicher Dauer unterteilt. Im herkömmlichen leitungsvermittelten Übertragungsmodus wird, wenn ein Anruf gestartet wird, ein physikalischer Kanal dadurch für diesen Anruf definiert, daß ein vorgegebener Zeitschlitz (1 bis 8) in jedem einer Folge von TDMA-Rahmen reserviert wird. In ähnlicher Weise werden physikalische Kanäle zum Übertragen von Signalisierungsinformationen definiert.

Mit der Einführung von GPRS wird dadurch ein "Verkehrskanal" zum Übertragen von Daten geschaffen, daß physikalische Kanäle entweder für den leitungsvermittelten Übertragungsmodus oder für den paketvermittelten Übertragungsmodus dynamisch zugeordnet werden. Wenn der Bedarf im Netzwerk für den leitungsvermittelten Übertragungsmodus hoch ist, kann für diesen Modus eine große Anzahl physikalischer Kanäle reserviert werden. Wenn dagegen der Bedarf an GPRS-Übertragung hoch ist, kann für diesen Modus eine große Anzahl physikalischer Kanäle reserviert werden. Außerdem kann ein Hochgeschwindigkeitskanal für paketvermittelte Übertragung dadurch geschaffen werden, daß in jedem einer Folge von TDMA-Rahmen einer einzelnen MS zwei oder mehr Zeitschlitze zugeordnet werden.

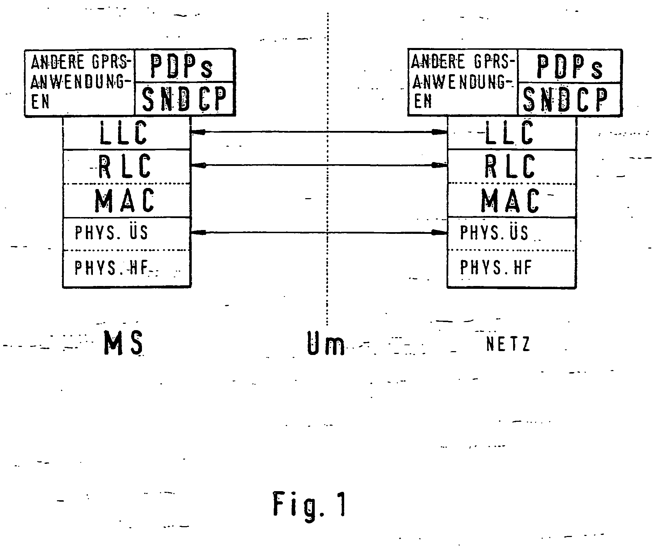

Die GPRS-Funkschnittstelle für die Phase 2+ von GSM (GSM 03.64) kann als Hierarchie logischer Schichten mit speziellen Funktionen nachgebildet werden, wie es in Fig. 1 dargestellt ist, wobei die Mobilstation (MS) und das Netz identische Schichten aufweisen, die über eine MS/Netzwerk-Schnittstelle kommunizieren. Es ist zu beachten, daß das Modell von Fig. 1 nicht notwendigerweise die Hardware repräsentiert, wie sie in der MS und im Netz enthalten ist, sondern daß es vielmehr den Fluß und die Verarbeitung von Daten durch das System veranschaulicht. Jede Schicht formatiert von der Nachbarschicht empfangene Daten, wobei empfangene Daten von unten nach oben in der Schicht durchlaufen, während zu sendende Daten von oben nach unten in der Schicht durchlaufen.

In der obersten Schicht der MS befindet sich eine Anzahl von Packetdatenprotokoll (PDP)-Objekten. Bestimmte dieser PDP-Objekte verwenden PTP (point-to-point = Punkt-zu-Punkt)-Protokolle, die so ausgebildet sind, daß sie Paketdaten von einer MS zur anderen oder von einer MS zu einer festen Endstelle senden. Beispiele von PTP-Protokollen sind das IP (Internet Protocol) sowie X.25, die Schnittstellen mit Nutzanwendungen bilden können, was in Fig. 1 nicht dargestellt ist. Es sei darauf hingewiesen, daß zwei oder mehr der PDP-Objekte dasselbe PDP verwenden können. Auch befinden sich auf der oberen Schicht andere GPRS-Endpunkt-Protokollobjekte wie SMS und Signalisierung. Eine ähnliche Anordnung existiert innerhalb des Netzes und insbesondere im bedienenden GPRS-Unterstützungsknoten SGSN (Serving GPRS Support Node).

Bestimmte der Objekte der obersten Schicht verwenden ein gemeinsames teilnetzabhängiges Konvergenzprotokoll (SNDSP Subnetwork Dependent Convergence Protocol), nämlich GSM 04.65, das, wie es sein Name nahelegt, die verschiedenen SNDCP-Nutzerdaten in eine gemeinsame Form, nämlich in SNDCP-Protokolldateneinheiten übersetzt oder "konvergiert", die für die Weiterverarbeitung auf transparente Weise geeignet ist. SNDCP-Einheiten liegen mit bis zu 1600 Oktetten vor, und sie umfassen ein Adreßfeld, das eine Netz-Dienstzugriffpunkt-Kennung NSAPI (= Network Service Access Point Identifier) enthält, die den Verbindungsendpunkt identifiziert, d.h. den SNDCP-Teilnehmer. Jeder MS kann ein Satz von NSAPI unabhängig von den anderen MSen zugeordnet werden. Diese Architektur bedeutet, daß in der Zukunft neue PDPs und Weiterleitungen entwickelt werden können, die leicht in die vorhandene GPRS-Architektur eingefügt werden können.

Jede SNDCP-Einheit oder eine andere Einheit eines GPRS-Endpunktprotokolls wird mittels eines LLC-Rahmens zur Steuerung der logischen Übertragungsstrecke LLC (Logical Link control) über die Funkschnittstelle transportiert. Die LLC-Rahmen werden in der LLC-Schicht aufgestellt (GSM 04.64), und sie enthalten einen Kopfrahmen mit Zähl- und Zwischenadressierfeldern, ein Informationsfeld für variable Länge, sowie eine Rahmen-Prüfabfolge. Genauer gesagt, enthalten die Adressierfelder eine Dienstzugriffspunkt-Kennung SAPI (Service Access Point Identifier), die dazu verwendet wird, einen speziellen Verbindungsendpunkt und dessen relative Priorität und die Dienstequalität (QOS (Quality of Service) auf der Netzseite und der Teilnehmerseite der LLC-Schnittstelle zu identifizieren. Ein Verbindungsendpunkt ist das SNDCP. Zu anderen Endpunkten gehören der Kurzmeldungsdienst SMS (Short Message Service) und die Verwaltungsschicht (L3M). Die LLC-Schicht formatiert von diesen verschiedenen Endpunktprotokollen empfangene Daten. SAPIs werden dauernd zugeordnet und sind allen MSen gemeinsam.

Die Schicht zur Steuerung der Funkübertragungsstecke RLC (Radio Link Control) definiert unter anderem die Abläufe zum Segmentieren und Neuzusammensetzen von PDUs der LLC-Schicht, sogenannte LLC-PDUs (PDU = Protocol Data Unit = Protokolldateneinheit) in RLC-Datenblöcke sowie zum Wiederübertragen nicht erfolgreich gelieferter RLC-Blöcke. Die Schicht zur Medien-Zugriffssteuerung MAC (Medium Access Control) arbeitet oberhalb der Schicht mit der physikalischen Übertragungsstrecke und definiert die Abläufe, die es ermöglichen daß mehrere MSen ein gemeinsames Übertragungsmedium nutzen. Die MAC-Funktion sorgt für eine Prioritätszuteilung zwischen mehreren MSen, die versuchen, gleichzeitig zu senden, und sie sorgt für Kollisionsvermeidung-, Erkennungs- und Wiederherstellabläufe.

Die Schicht der physikalischen Verbindungsstrecke (Phys.ÜS) stellt einen physikalischen Kanal zwischen einer MS und dem Netz zur Verfügung. Die physikalische HF-Schicht (Phys.HF) spezifiziert u.a. die Trägerfrequenzen und die GSM-Funkkanalstrukturen, die Modulation der GSM-Kanäle und die Sender-/Empfänger-Eigenschaften.

Wenn eine MS in einem Netz aktiv wird, ist es erforderlich, genau zu definieren, wie Daten in jeder der oben beschriebenen Schichten zu verarbeiten sind. Dieser Prozeß umfaßt auch das Ausführen vorläufiger Verhandlungen zwischen der MS und dem Netz. Insbesondere werden zwischen den zwei Peer-SNDCP-Schichten in einem Verhandlungsstadium betreffend XID (Exchange Identity = Vermittlungsstellenidentität)-Parameter über die jeweiligen LLC-Schichten Steuerungsparameter ausgetauscht, die als SNDCP-XID-Parameter bekannt sind. Der Start der XID-Verhandlungen kann entweder in einer MS oder dem Netz erfolgen. Beim Empfang eines XID-Parameters konfiguriert sich das Peerobjekt entweder selbst entsprechend diesem Parameter oder führt eine weitere Verhandlung mit dem Teilnehmerobjekt aus. Das Feldformat der SNDCP-Parameter ist das folgende:

| Bit | 8 | 7 | 6 | 5 | 4 | 3 | 2 | 1 |
|---|---|---|---|---|---|---|---|---|
| Oktett 1 | Parametertyp | | | | | | | |
| Oktett 2 | Länge = n - 1 | | | | | | | |
| Oktett 3 | Oktett hoher Ordnung | | | | | | | |
| .... | ... | | | | | | | |
| Oktett n | Oktett niedriger Ordnung | | | | | | | |

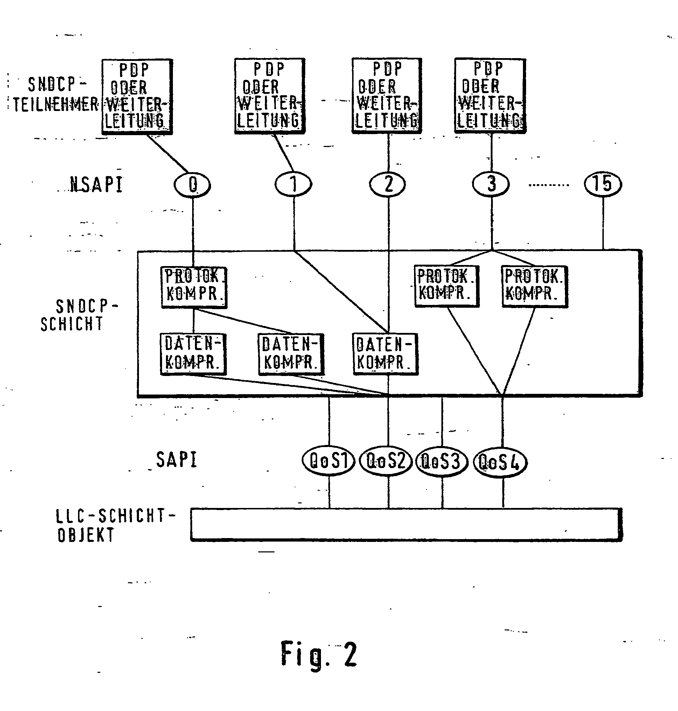

In Fig. 2 sind die SNDCP-Schicht und ihre Schnittstellen zu den SNDCP-Teilnehmern und zur LLC-Schicht detaillierter betrachtet, wobei Anwendungen sowohl auf die MS- als auch die SGSN-Architektur besteht. Insbesondere veranschaulicht Fig. 2 die Kompression des Protokolls und/oder von Teilnehmerdaten, wie sie in der SNDCP-Schicht wahlweise ausgeführt wird, wie in der GSM-Empfehlung 04.65 beschrieben. Daten werden als erstes komprimiert und dann in Blöcke unterteilt, bevor der SNDCP-Kopf hinzugefügt wird und die SNDCP-Einheit zusammengesetzt wird. Aus Fig. 2 ist ersichtlich, daß sie für die Vorbereitung von Daten zur Übertragung gilt. Empfangene Daten werden entsprechend einer analogen umgekehrten Entkomprimierung verarbeitet.

Gemäß der aktuellen Empfehlung GSM 04.65 können verschiedene Kompressionsalgorithmen zur Kompression von Protokolldaten bereitgestellt werden, während zur Kompression von Teilnehmerdaten nur ein einzelner Kompressionsalgorithmus speziell in Betracht gezogen wird, wobei jedoch für zukünftige Entwicklungen vorgesorgt ist, gemäß denen mehrere verschiedene Kompressionsalgorithmen für Teilnehmerdaten verfügbar gemacht werden._Typischerweise erfolgt die Entscheidung dahingehend, ob Kompression verwendet wird, von der Anwendung in der Teilnehmer-Schnittstelle, die die Teilnehmerdaten erzeugt, wie sie über einen der SNDCP-Teilnehmer an die SNDCP-Schicht geliefert werden. Die Entscheidung wird der SNDCP-Schicht mitgeteilt. Jedoch kann Kompression nur dann verwendet werden, wenn sie in den beiden Peer-SNDCP-Schichten verfügbar ist.

Während der Verhandlungen betreffend SNDCP-XID-Parameter können ein oder mehrere Protokoll-Kompressions/Entkompressions-Objekte definiert werden und in den zwei Peer-SNDCP-Schichten durch Austausch von XID-Parametern mitgeteilt werden. In ähnlicher Weise kann ein Teilnehmerdaten-Kompression/Entkompression-Objekt oder mehrere derartige Objekte durch Austausch anderer XID-Parameter definiert werden. Die GSM-Empfehlung 04.65 schlägt zu diesem Zweck die folgende XID-Meldung vor:

| Bit | 8 | 7 | 6 | 5 | 4 | 3 | 2 | 1 |
|---|---|---|---|---|---|---|---|---|
| Oktett 1 | Algorithmus | | | | | | | |
| Oktett 2 | Länge = n - 1 | | | | | | | |
| Oktett 3 | Oktett hoher Ordnung | | | | | | | |
| | | | | | | | | |
| Oktett n | Oktett niedriger Ordnung | | | | | | | |

Das Oktett 1 identifiziert einen speziellen Algorithmus, während das Oktett 2 die Anzahl der Oktette identifiziert, die in der XID-Meldung folgen sollen. Diese folgenden Oktette definieren Parameter des gewählten Algorithmus, wie die Länge eines zu verwendenden Codebuchs oder die Länge des in einem Codebuch zu verwendenden Codeworts.

Wie es bereits beschrieben wurde, werden PDP-Kontextdaten in der SNDCP-Schicht zu SNDCP-Einheiten zusammengesetzt. Die SNDCP-Schicht fügt an jede Einheit eine PCOMP (Protocol control information compression = Protokollsteuerungsinformations-Kompression)-Kennung an, die anzeigt, ob die in dieser Einheit enthaltenen Protokolldaten komprimiert wurden oder nicht, und welcher Kompressionsalgorithmus gegebenenfalls verwendet wurde. In ähnlicher Weise wird eine DCOMP (Data Compression = Datenkompression)-Kennung angefügt, um anzuzeigen, ob die Teilnehmerdaten komprimiert wurden oder nicht, und gegebenenfalls welcher Algorithmus verwendet wurde. Die empfangende SNDCP-Schicht kann beim Empfang jeder Einheit ermitteln, ob die PDP-Kontextdaten entkomprimiert werden müssen oder nicht, und welcher Entkompressionsalgorithmus gegebenenfalls zu verwenden ist, bevor die Daten an das geeignete Objekt, wie durch die in der empfangenden SNDCP-Einheit enthaltene NSAPI gekennzeichnet, weitergeleitet werden.

Zu zur Kompression von Daten, sowohl Protokoll- als auch Teilnehmerdaten in der SNDCP-Schicht geeigneten Kompressionsalgorithmen gehören Algorithmen, die sich auf die Erzeugung eines Codebuchs stützen, in dem ein Satz von Codes durch jeweilige Vektoren identifiziert ist. Für jedes Datensegment wird das Codebuch durchsucht, um den am besten passenden Code zu finden. Dann wird der Vektor an das Peerobjekt übertragen, das ein identisches Codebuch enthält, das unter Verwendung des Vektors durchsucht wird, um den ursprünglichen Code wiederzugewinnen. Um den Wirkungsgrad des Kompressionsprozesses für die zu komprimierenden Daten zu optimieren, wird das Codebuch unter Verwendung der empfangenen Daten dynamisch aktualisiert. Wenn von zwei oder mehr PDP-Objekten derselbe Kompressonsalgorithmus verwendet wird, nutzen diese Objekte dasselbe Codebuch gemeinsam.

Wie es bereits oben beschrieben wurde, erlaubt die aktuelle ETSI-Empfehlung zum Realisieren der SNDCP-Schicht in GPRS eine Anzahl von Kompressions/Entkompressions-Algorithmen, die sowohl für Protokoll- als auch Teilnehmerdaten zu definieren sind. Jeder Algorithmus wird zwischen zwei Peer-SNDCP-Schichten (peer layers = Schichten auf derselben Protokollebene; eine in einer MS und die andere im Netz) vor der Kompression und Übertragung von diese Daten enthaltenden SNDCP-Einheiten verhandelt. Wenn eine SNDCP-Einheit übertragen wird, sind in dieser Einheit Kennungen PCOMP und DCOMP enthalten, um der empfangenden Schicht anzuzeigen, ob in der Einheit enthaltene Paketdaten und/oder Teilnehmerdaten komprimiert sind oder nicht, und welche Algorithmen gegebenenfalls verwendet wurden. Hier ist vorgeschlagen, daß in die zum Aushandeln eines Algorithmus verwendete XID-Meldung eine Bitkarte eingesetzt wird, die anzeigt, welche NSAPIs diesen Algorithmus verwenden sollen. Gemäß dem aktuellen ETSI-Vorschlag können einer MS 16 NSAPIs zugeordnet werden. So werden zur XID-Meldung zwei zusätzliche Oktetts hinzugefügt, wobei die Position eines Bits (0 bis 15) die NSAPI (1 bis 16) anzeigt, wobei eine "1" anzeigt, daß eine NSAPI den Algorithmus verwendet, während eine "0" anzeigt, daß eine NSAPI den Algorithmus nicht verwendet. Die neue XID-Meldung ist die folgende:

| Bit | 8 | 7 | 6 | 5 | 4 | 3 | 2 | 1 |
|---|---|---|---|---|---|---|---|---|
| Oktett 1 | Algorithmustyp | | | | | | | |
| Oktett 2 | Länge n - 1 | | | | | | | |
| Oktett 3 | Anwendbare NSAPIs (Bitkarte) | | | | | | | |
| .... | Anwendbare NSAPIs (Bitkarte) | | | | | | | |
| .... | Oktett hoher Ordnung | | | | | | | |
| .... .... | | | | | | | | |
| Oktett n | Oktett niedriger Ordnung | | | | | | | |

Wenn zwischen zwei Peer-SNDCP-Schichten einmal ein Algorithmus ausgehandelt ist, ist es möglich, für diesen Algorithmus mehrere verschiedene Kompressions/Entkompressions-Codebücher zu erzeugen, von denen jedes einer jeweiligen NSAPI zugeordnet ist. So ist es möglich, den Kompressions/Entkompressions-Prozeß für verschiedene NSAPIs, d.h. für verschiedene SNDCP-Teilnehmer zu optimieren. In einigen Fällen kann ein einzelnes Codebuch immer noch gemeinsam durch mehrere NSAPIs genutzt werden, die denselben Algorithmus verwenden. Dies kann z.B. dann zweckdienlich sein, wenn zwei Endteilnehmer dasselbe PDP gemeinsam nutzen und demgemäß wahrscheinlich ähnliche Daten erzeugen, für die ein gemeinsames Codebuch geeignet ist.

Wenn eine SNDCP-Einheit von einer SNDCP-Schicht empfangen wird, werden die verwendeten Kompressionsalgorithmen - falls welche verwendet sind - aus den Kennungen PCOMP und DCOMP erkannt. Das zur Kompression beim erkannten Algorithmus zu verwendende Codebuch kann dann aus der in der Einheit enthaltenen NSAPI erkannt werden, wie oben beschrieben.

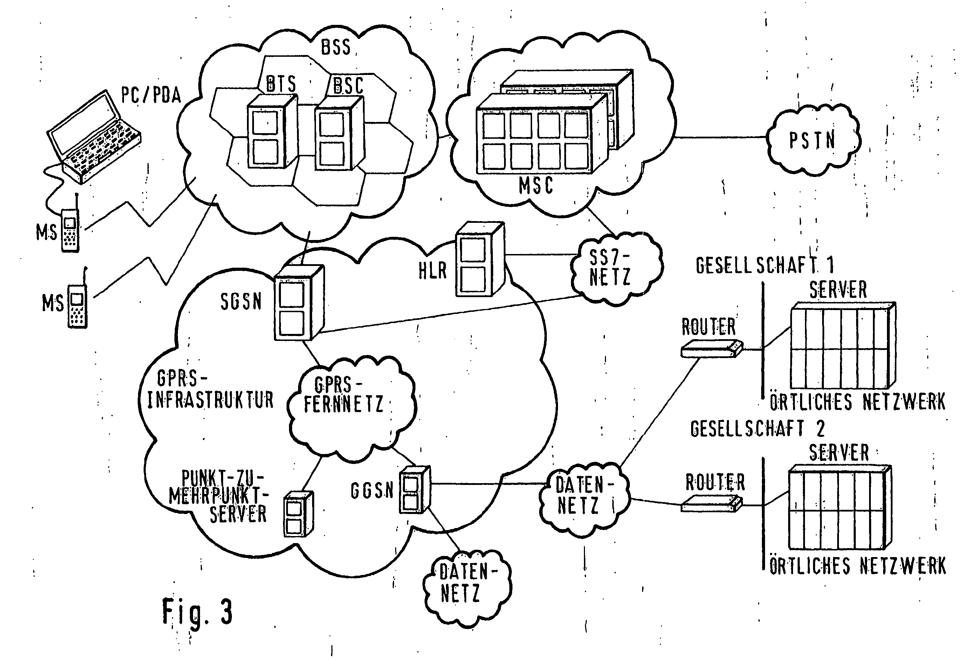

Der allgemeine Aufbau eines GSM/GPRS-Funktelefonnetzes ist in Fig. 3 veranschaulicht, in der die folgenden Akronyme verwendet sind:

| **Akronym** | **englisch** | **deutsch** |
|---|---|---|
| BSC | Base Station Controller | Basisstations- |
| | | Steuerung |
| BSS | Base Station Subsystem | Basisstations- |
| | | Untersystem |
| BTS | Base Transceiver Station | Basis-Sendeempfänger- |
| | | Station |
| GGSN | Gateway GPRS Support Node | Netzübergang-GPRS- |
| | | Unterstützungsknoten |
| GPRS | General Packet Radio | Allgemeine Datenpak- |
| | Service | ket-Funkdienste |
| GSM | Global System for Mobile | Globales System für |
| | Communications | mobile Kommunikation |
| HLR | Home Location Register | Ausgangsortregister |
| IP | Internet Protocol | Internetprotokoll |
| L3M | Layer 3 Management | Schicht 3 für Ver- |
| | | Waltung |
| LLC Logical | Link Control- | Steuerung für |
| | | logische Übertra- |
| | | gungsstrecke |
| MAC | Medium Access Control | Medienzugriffs- |
| | | Steuerung |
| MS | Mobile Station | Mobilstation |
| MSC | Mobile Switching Center | Zentrale Mobilver-Mittlungsstelle |
| NSAPI | Network Service Access Point Identifier | Netz-Dienstzugriffspunkt-Kennung |
| PC/PDA | Personal Computer/ Personal Data Assistant | PC/Persönlicher Datenassistent |
| PDP | Packet Data Protocol | Packetdatenprotokoll |
| PDU | Packet Data Unit | Packetdateneinheit |
| PSTN | Public-Switched-Tele-Phone Network | Öffentliches Vermittlungstelefonnetz |
| PTM-G | Point-To-Multipoint Group | Punkt-zu-Mehrpunkt-Gruppe |
| PTM-M | Point-To-Moltipoint Multicast | Punkt-zu-Mehrpunkt-Multicasting (gleich-zeitige Benachrichti-Gung mehrerer Teil-Nehmer) |
| PTP | Point-To-Point | Punkt-zu-Punkt |
| RLS | Radio Link Control | Steuerung der Funk-Übertragungsstrecke |
| SAPI | Service Access Point | Dienstzugriffspunkt-Kennung |
| SGSN | Serving GPRS Support Node | Bedienender GPRS-Unterstützungsknoten |
| SMS | Short Message Service | Kurzmeldungsdienst |
| SNDCP | Subnetwork Dependent | Teilnetzabhängiges |
| | Convergence Protocol | Konvergenzprotokoll |
| SS7 | Signalling System Number 7 | Signalabgabesystem Nummer 7 |
| TCP/IP | Transmission Control | Übertragungs- |
| | Protocol/Internet Protocol | steuerungsprotokoll/ Internetprotokoll |
| TDMA | Time Division Multiple Access | Zeitmultiplex-Vielfachzugriff |
| Um | Mobile Station to Net-Work Interface | Mobilstation/Netz-Schnittstelle |
| UMTS | Universal Mobile Tele-Communications Service | Universeller Mobil-kommunikationsdienst |
| X.25 | Network layer protocol Specification | Spezifizierung eines Protokolls für die Netzschicht |

### Vorteile der Erfindung

Das erfindungsgemäße Verfahren zum Betreiben eines Mobilfunknetzes mit den Merkmalen des Hauptanspruchs hat demgegenüber den Vorteil, daß jedem Zugriffspunkt genau ein Datenkompressionsalgorithmus und/oder genau ein Protokollsteuerinformationskompressionsalgorithmus in der ersten Konvergenz-Protokollschicht zugeordnet wird, wobei die vom Nutzer gelieferten Daten gemäß dem zugeordneten Datenkompressionsalgorithmus und/oder mit den Daten _gelieferte oder für die Daten erzeugte Protokollsteuerinformationen gemäß dem zugeordneten Protokollsteuerinformations-Kompressionsalgorithmus in der ersten Konvergenzprotokollschicht komprimiert werden, und daß die so komprimierten Daten und/oder Protokollsteuerinformationen zu der mindestens einen ersten Einheit zusammengesetzt werden. Auf diese Weise ist eine eindeutige Zuordnung zwischen Zugriffspunkt und Datenkompressionsalgorithmus bzw. zwischen Zugriffspunkt und Protokollsteuerinformations-Kompressionsalgorithmus gewährleistet, so daß durch Angabe des Zugriffspunktes der zu verwendende Datenkompressionsalgorithmus bzw. der zu verwendende Protokollsteuerinformations-Kompressionsalgorithmus festliegt und somit nicht separat angegeben werden muß. Somit läßt sich zumindest eine der beiden Kennungen PCOMP und DCOMP einsparen, auch wenn sowohl eine Datenkompression als auch eine Protokollsteuerinformations-Kompression für die über einen Zugriffspunkt von der Netzwerkschicht zur ersten Konvergenz-Protokollschicht gelieferten Daten und Protokollsteuerinformationen vorgesehen ist. Somit wird die Anzahl der zu übertragenden Kennungen für die erste Einheit minimiert und die zur Verfügung stehende Übertragungsbandbreite effektiver genutzt.

Ein weiterer Vorteil besteht darin, daß beim Empfang der ersten Einheit ein Minimum an Kennungen ausgewertet werden muß, um die Daten und/oder Protokollsteuerinformationen gemäß den dem zugeordneten Zugriffspunkt zugeordneten Algorithmen zu entkomprimieren.

Erfindungsgemäß ist es, daß mit der mindestens einen ersten Einheit eine Kennung mindestens eines Zugriffspunktes übertragen wird. Durch die eindeutige Zuordnung genau eines Datenkompressionsalgorithmus und/oder genau eines Protokollsteuerinformations-Kompressionsalgorithmus zu dem jeweiligen Zugriffspunkt wird durch diese Kennung der dem jeweiligen Zugriffspunkt eindeutig zugeordnete Datenkompressionsalgorithmus und/oder der dem jeweiligen Zugriffspunkt eindeutig zugeordnete Protokollsteuerinformations-Kompressionsalgorithmus mitreferenziert, so daß für den entsprechenden Kompressionsalgorithmus keine eigene Kennung übertragen werden muß und Übertragungsbandbreite eingespart wird.

Durch die in den Unteransprüchen aufgeführten Maßnahmen sind vorteilhafte Weiterbildungen und Verbesserungen des im Hauptanspruch angegebenen Verfahrens möglich.

### Zeichnung

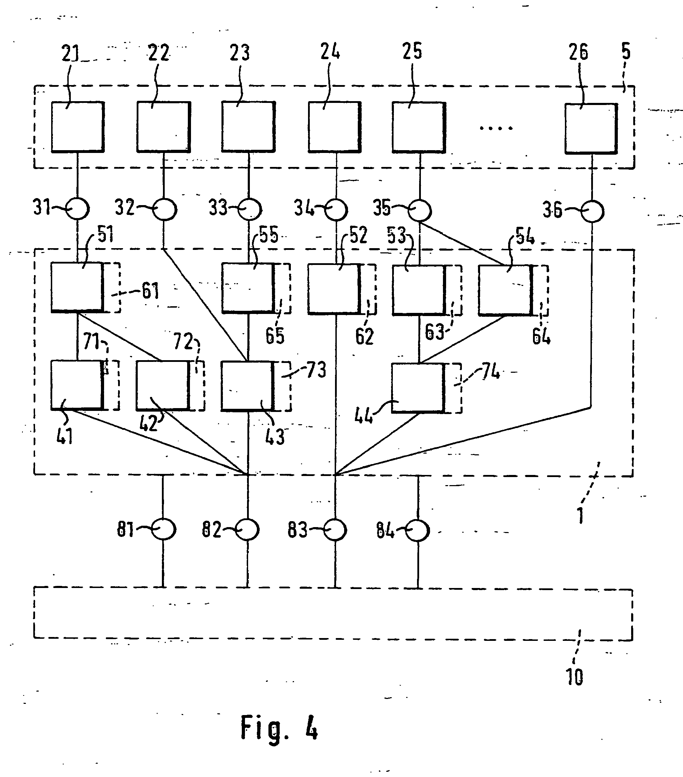

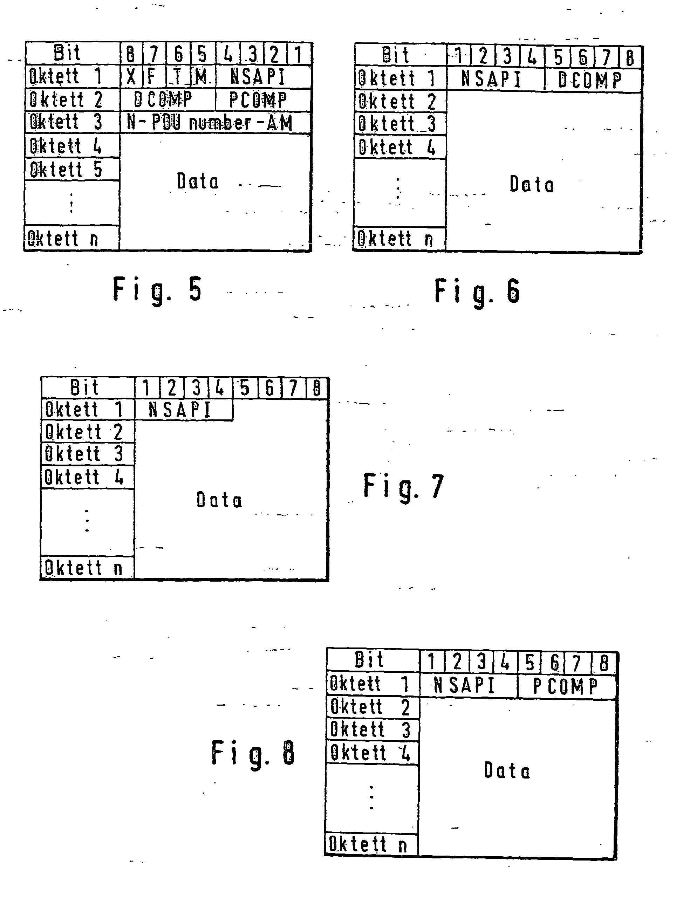

Ein Ausführungsbeispiel der Erfindung ist in der Zeichnung dargestellt und in der nachfolgenden Beschreibung näher erläutert. Es zeigen Figur 1 die Protokollschichten einer GPRS-Funkübertragungsstrecke, Figur 2 die oberen Schichten des Protokolls von Figur 1 in detaillierterer Weise, Figur 3 eine schematische Ansicht der Architektur eines digitalen GSM-GPRS-Kleinzonentelefonnetzes, Figur 4 ein Blockschaltbild einer Netzwerkschicht, einer Konvergenzprotokollschicht und einer Kanalsteuerungsschicht, Figur 5 ein Beispiel für eine Dateneinheit nach dem Stand der Technik, Figur 6 ein erstes Beispiel einer Dateneinheit gemäß der Erfindung, Figur 7 ein zweites Beispiel einer Dateneinheit gemäß der Erfindung und Figur 8 ein drittes Beispiel einer Dateneinheit gemäß der Erfindung.

### Beschreibung des Ausführungsbeispiels

Die Erfindung betrifft ein Paketdaten-Konvergenzprotokoll für Mobilfunknetze. Insbesondere schlägt diese Erfindung Funktionalitäten innerhalb einer Konvergenzprotokollschicht vor, die beispielsweise in einem Mobilfunksystem nach dem UMTS-Standard (Universal Mobile Telecommunications System) oder auch in einem Mobilfunksystem nach dem GSM-Standard Anwendung finden kann. Dabei soll beispielhaft jeweils eine Paketvermittlung gemäß dem GPRS-System betrachtet werden.

Das gemäß dem UMTS-Standard verwendete Konvergenzprotokoll wird dabei als PDCP (Packet data Convergence Protocol) bezeichnet. Die Erfindung wird nun beispielhaft in zwei Teilen beschrieben. Der erste Teil beschreibt das UMTS-System, in dem das PDCP Anwendung findet, der zweite Teil beschreibt das GSM-System, in dem das SNDCP Anwendung findet.

Die Funktionalitäten des UMTS-Mobilfunksystems werden wie auch beim GSM-Mobilfunksystem in Schichten aufgeteilt und innerhalb der Schichten werden verschiedene Protokolle spezifiziert, die den höheren Schichten jeweils Dienste zur Verfügung stellen und die von unterhalb liegenden Schichten angebotene Dienste nutzen. Jedes Protokoll existiert dabei innerhalb des Mobilfunksystems mindestens zwei mal, nämlich in mindestens zwei Einheiten, wobei die Einheiten jeweils in der gleichen Schicht liegen. Die beschriebene Schichthierarchie wird dabei in eine Nutzerebene und in eine Steuerebene eingeteilt. Die Nutzerebene wird auch als User-Plane bezeichnet und die Steuerebene wird auch als Control-Plane bezeichnet. Protokolle, in denen Nutzdaten transportiert werden, sind dabei der Nutzerebene zugeordnet. Protokolle, in denen Steuerdaten transportiert und teilweise erzeugt werden, sind der Steuerebene zugeordnet. Für diese Erfindung ist die Schicht- oder Protokollhierarchie der Nutzerebene relevant, da die Konvergenz-Protokollschicht in der Nutzerebene liegt und Dienste zum Nutzdatentransport bereitstellt. Nutzdaten, die von Applikationen in Paketen erzeugt werden und paketorientiert übertragen werden sollen, werden von der entsprechenden Applikation zunächst einem Transportschicht-Protokoll in einer Transportschicht übergeben. Bekannt sind hier das TCP (Transmission Control Protocol) und das UDP (User Datagram Protocol). Aber es sind auch andere Transportschicht-Protokolle oder eine transparente Transportschicht denkbar,-durch die die zu übertragenden Nutzdaten transparent ohne Nutzung eines Transportschicht-Protokolls durchgereicht werden. Die Transportschicht nutzt Dienste eines Netzwerkprotokolls in einer unterhalb der Transportschicht liegenden Netzwerkschicht. Die Netzwerkschicht ist in Figur 4 dargestellt und mit dem Bezugszeichen 5 gekennzeichnet. Die Netzwerkprotokolle werden wie beschrieben als PDP (Packet Data Protocol = Paket-Daten-Protokoll) bezeichnet. Die Transportschicht nutzt die Dienste der PDPs, um die Nutzdaten zu übertragen. Die bekanntesten PDPs der Netzwerkschicht 5 sind das IP (Internet Protocol) und das X.25-Protokoll. Sowohl die Netzwerk- als auch die Transportprotokolle können den Nutzdaten Kontrolldaten hinzufügen, beispielsweise in Form einer TCP-/IP-Kopfinformation bzw. eines TCP-/IP-Headers. Unterhalb der Netzwerkschicht 5 liegen nun die UMTS-spezifischen Protokolle. Mit jedem PDP werden Daten über die von dem PDP genutzte Datenverbindung im Mobilfunknetz und in einem mit dem Mobilfunknetz kommunizierenden Endgerät des Mobilfunknetzes, bspw. in einer Mobilstation, gespeichert. Diese Daten können beispielsweise Parameter über die Dienstequalität QOS beinhalten und werden als PDP-Kontext bezeichnet. Es ist möglich, ein PDP gleichzeitig mit verschiedenen Kontexten zu betreiben, wobei sich die Kontexte nur in den Parametern für die Dienstequalität QOS unterscheiden. Es kann also in einem Endgerät ein IP-Protokoll mit einer IP-Adresse einmal mit einem ersten Parameter für die Dienstequalität QOS und einmal mit einem zweiten Parameter für die Dienstequalität QOS betrieben werden. PDP-Kontexte können jedoch auch auf verschiedenen Netzwerkprotokollen basieren. So kann es beispielsweise vorgesehen sein, daß in einem Endgerät drei verschiedene Netzwerkprotokolle laufen: 2 IP-Protokolle mit unterschiedlicher IP-Adresse und ein X.25-Protokoll.

Jeder dieser PDP-Kontexte wird im GPRS-Modell, das sowohl für das UMTS-System als auch für das GSM-System anwendbar ist, als eigenständiger Block in der Netzwerkschicht 5 oberhalb der Konvergenzprotokollschicht dargestellt und in Figur 4 mit den Bezugszeichen 21, 22, 23, 24, 25, 26 gekennzeichnet. Die PDP-Kontexte stellen dabei Nutzer einer unterhalb der Netzwerkschicht 5 liegenden Konvergenzprotokollschicht 1 gemäß Figur 4 dar.

Das PDCP paßt die Nutzdaten, die von einem PDP-Kontext kommen, der Übertragung über eine Luftschnittstelle an, indem es die Nutzdaten und/oder die den Nutzdaten zugefügten Kontrolldaten oder Protokollsteuerinformationen optional komprimiert und eventuell Paketdatenströme von verschiedenen PDP-Kontexten zu einem Paketdatenstrom zusammensetzt. Unterhalb der für die Bildung des PDCP vorgesehenen Konvergenzprotokollschicht 1 befindet sich im Schichtmodell des UMTS-Mobilfunksystems eine RLC-Verbindungssteuerungsschicht (Radio Link Control) 10, die optional Übertragungsfehler der Luftschnittstelle korrigiert, indem sie auf der Empfängerseite fehlerhafte Pakete wieder anfordert und auf der Senderseite erneut verschickt. Desweiteren sorgt die RLC-Verbindungssteuerungsschicht 10 optional dafür, daß die Reihenfolge der Datenpakete bei der Übertragung erhalten bleibt und sie segmentiert die Datenpakete in sogenannte RLC-PDUs (RLC Packet Data Ünit), deren Länge den verwendeten Übertragungskanälen angepaßt ist. Die RLC-Verbindungssteuerungsschicht 10 nutzt dann die Dienste der darunterliegenden MAC-Schicht (Medium Access Control), um die RLC-PDUs zu übertragen. Die MAC-Schicht sorgt für den Zugriff auf das eigentliche Übertragungsmedium, wählt geeignete Transportformate aus und multiplext die verschiedenen RLC-PDUs auf geeignete Transportkanäle, die in der darunterliegenden physikalischen Schicht auf die zugewiesenen-physikalischen Kanäle abgebildet werden. Die beschriebene Schicht- oder Protokollhierarchie ist aus der Veröffentlichung "Radio Interface Protocol Architecture", 3 GPP TS 25.301 bekannt. Einige der beschriebenen Schichten, d.h. die physikalische Schicht, die MAC-Schicht, die RLC-Verbindungssteuerungsschicht 10 und die Konvergenzprotokollschicht 1 haben auch eine direkte Verbindung zu einer Funkressourcensteuerung RRC (Radio Ressource Control) in der Steuerebene. Diese Verbindung wird genutzt, um Statusinformationen an die Funkressourcensteuerung RRC zu übertragen und um der Funkressourcensteuerung RRC eine Konfiguration der anderen Protokolle zu ermöglichen.

Die Erfindung schlägt ein Funktionsmodell in der Konvergenzprotokollschicht 1 vor. Dabei hat das PDCP des UMTS-Mobilfunksystems ähnliche Aufgaben wie das aus der DE 198 47 679 A1 bekannte SNDCP beim GSM-Mobilfunksystem. Das SNDCP beinhaltet dabei folgende Funktionen: Kompression der redundanten Protokollsteuerinformationen, Kompression der redundanten Nutzdateninformationen, Multiplexen der Paketdatenströme verschiedener PDP-Kontexte auf eine logische Übertragungsstrecke LLC, Segmentierung-der komprimierten Datenpakete in SNDCP-Paketdateneinheiten und Aushandlung der Kompressionsparameter mit einer Peer-Protokoll-Einheit.

Von diesen Funktionen werden in dieser Erfindung nur die Kompression der redundanten Protokollsteuerinformationen, die Kompression der redundanten Nutzdateninformationen und das Multiplexen der Paketdatenströme verschiedener PDP-Kontexte auf eine Verbindung in der RLC-Verbindungssteuerungsschicht 10, die im folgenden einfach als Verbindungssteuerungsschicht 10 bezeichnet wird, vorgeschlagen. Das Aushandeln der Kompressionsparameter zwischen dem Endgerät und einer Instanz des Mobilfunknetzes wird beim UMTS-Standard von der Funkressourcensteuerung RRC in der Steuerebene durchgeführt.

In Figur 4 ist die Netzwerkschicht 5, die Konvergenzprotokollschicht 1 und die Verbindungssteuerungsschicht 10 anhand des UMTS-Mobilfunksystems eingeführt worden. Die drei Schichten sind auch beim GSM-Mobilfunksystem vorgesehen, wobei wie beschrieben beim UMTS-Mobilfunksystem in der Konvergenzprotokollschicht 1 PDCP-Konvergenzprotokolle vorgesehen sind, wohingegen beim GSM-Mobilfunksytem SNDCP-Konvergenzprotokolle vorgesehen sind, die wie beschrieben ähnliche Funktionen wie die PDCP-Konvergenzprotokolle aufweisen. Der Schichtaufbau gemäß Figur 4 ist daher sowohl auf das UMTS-Mobilfunksystem als auch auf das GSM-Mobilfunksystem anwendbar. Dabei nutzt gemäß Figur 4 jeder PDP-Kontext 21, 22, ..., 26 die Dienste der Konvergenzprotokollschicht 1 an einem ihm jeweils zugeordneten Zugriffspunkt 31, 32, ..., 36, der auch als Netzwerkschicht Dienstezugriffspunkt NSAP (Network Layer Service Access Point) bezeichnet wird. Jedem dieser Zugriffspunkte 31, 32, ..., 36 ist eine Kennung NSAPI (Network Layer Service Access Point Identifier) zugeordnet, der den zugeordneten PDP-Kontext eindeutig kennzeichnet. Maximal 16 NSAPs sind derzeit gleichzeitig in einem Endgerät vorgesehen. Die Verbindungen der Verbindungssteuerungsschicht 10 werden von der Konvergenzprotokollschicht 1 gemäß Figur 4 über Dienstzugangspunkte 81, 82, 83, 84 genutzt, die auch als SAP (Service Access Point) bezeichnet werden und denen jeweils ebenfalls eine Kennung SAPI (Service Access Point Identifier) zugeordnet ist, die den jeweiligen Dienstzugangspunkt 81, 82, 83, 84 und damit die einzelnen Verbindungen zwischen der Konvergenzprotokollschicht 5 und der Verbindungssteuerungsschicht 10 kennzeichnet. Dabei bietet jeder Dienstzugangspunkt 81, 82, 83, 84 eine bestimmte Dienste- oder Übertragungsqualität QOS und es sind beim GSM-Mobilfunksystem maximal vier verschiedene Dienstzugangspunkte und damit vier verschiedene Verbindungen in der Verbindungssteuerungsschicht 10 mit unterschiedlicher Übertragungsqualität QOS vorgesehen. Beim UMTS-Mobilfunksystem können beispielsweise und ohne Einschränkung auf dieses Beispiel drei verschiedene Dienstzugangspunkte mit jeweils verschiedenen Verbindungen in der Verbindungssteuerungsschicht 10 mit unterschiedlicher Übertragungsqualität QOS vorgesehen sein. Um es der Konvergenzprotokollschicht 1 zu ermöglichen, an einem der Dienstzugangspunkte 81, 82, 83, 84 ankommende oder empfangene Datenpakete nach der Entkompression der Nutzdaten und/oder der Protokollsteuerungsinformationen dieser Datenpakete an den richtigen Empfänger bzw. an den richtigen PDP-Kontext weiterleiten zu können, muß den Datenpaketen vom Sender eine Kennung des empfangenden PDP-Kontextes, also des empfangenden Nutzers der Konvergenzprotokollschicht 1 hinzugefügt werden. Als Kennung wird dazu der NSAPI genutzt, der senderseitig jedem Datenpaket beispielsweise als 4-bit-Wert hinzugefügt wird.

Da die Konvergenzprotokollschicht die Pakete, die von einem NSAP an einen SAP gehen, mit verschiedenen Protokollsteuerinformations- und/oder Datenkompressionsalgorithmen komprimieren kann, muß gemäß der DE 198 47 679 A1 jedem Paket senderseitig auch eine Signalisierung hinzugefügt werden, die den jeweils verwendeten Kompressionsalgorithmus kennzeichnet, um eine geeignete Entkompression beim Empfänger zu ermöglichen. Diese Signalisierung wird in Form des Parameters PCOMP (Protocol Control Information Compression Algorithm) für die verwendete Kompression der Protokollsteuerinformationen und in Form eines Parameters DCOMP (Data Compression Algorithm) für die verwendete Datenkompression im entsprechenden Datenpaket hinzugefügt. Diese Parameter PCOMP und DCOMP sind gemäß dem GPRS-System ebenfalls als 4-bit-Wert ausgeführt.

Mit der Signalisierung der Kennungen NSAPI, PCOMP und DCOMP, die gemäß der Spezifikation GSM 04.65 jedem Datenpaket hinzugefügt werden, ist es der Konvergenzprotokollschicht 1 also möglich, für jedes empfangene Datenpaket zunächst mit Hilfe der Kennung DCOMP einen Datenentkompressionsalgorithmus für die Entkompression der Nutzdaten, mit Hilfe der Kennung PCOMP einen Protokollsteuerinformations-Entkompressionsalgorithmus für die Entkompression der Protokollsteuerinformationen und anschließend mit Hilfe der Kennung NSAPI den richtigen Nutzer der Konvergenzprotokollschicht 1 über deren Zugriffspunkt 31, 32, ..., 36 als Empfänger auszusuchen. Figur 5 zeigt das in der Konvergenzprotokollschicht 1 vom Konvergenzprotokoll SNDCP in GSM zusammengestellte Datenpaket, das auch als Paketdateneinheit bezeichnet wird, für den sogenannten Acknowledged-Mode (AM) gemäß der Standardisierung GSM 04.65, wobei die Felder "X", "F", "T", "M", "N-PDU-Number", -SNDCP- und damit GSM- spezifisch sind und für die Erfindung keine Bedeutung haben. Gemäß Figur 5 sind dabei vier Bits des ersten Oktetts mit der Kennung NSAPI belegt. Vier Bits des zweiten Oktetts sind mit der Kennung DCOMP und vier Bits des zweiten Oktetts sind mit der Kennung PCOMP belegt. Vom vierten bis zum n-ten Oktett werden dann die Nutzdaten übertragen.

Im folgenden wird die Erfindung anhand von Figur 4 und den Figuren 6 bis 8 näher beschrieben. In Figur 4 sind für die Konvergenzprotokollschicht 1 über die vier Dienstzugangspunkte 81, 82, 83, 84 vier Verbindungen in der Verbindungssteuerungsschicht 10 mit unterschiedlicher Dienste- bzw. Übertragungsqualität QOS zur Verfügung gestellt. Die Konvergenzprotokollschicht 1 umfaßt dabei vier Datenkompressionsalgorithmen 41, 42, 43, 44, die von der Netzwerkschicht 5 empfangene Nutzdaten komprimieren. Den Datenkompressionsalgorithmen 41, 42, 43, 44 ist jeweils ein Datenentkompressionsalgorithmus 71, 72, 73, 74 zugeordnet. Die Datenentkompressionsalgorithmen 71, 72, 73, 74 entkomprimieren von der Verbindungssteuerungsschicht 10 empfangene Nutzdaten. Sie machen dabei eine Datenkompression gemäß des zugeordneten Datenkompressionsalgorithmus rückgängig. Die Konvergenzprotokollschicht 1 umfaßt weiterhin Protokollsteuerinformations-Kompressionsalgorithmen 51, 52, 53, 54, 55, die von der Netzwerkschicht 5 mit den Nutzdaten empfangene und/oder in der Konvergenzprotokollschicht 1 für die empfangenen Nutzdaten erzeugte Protokollsteuerinformationen komprimieren. Den Protokollsteuerinformations-Kompressionsalgorithmen 51, 52, 53, 54, 55 ist in entsprechender Weise jeweils ein Protokollsteuerinformations-Entkompressionsalgorithmus 61, 62, 63, 64, 65 zugeordnet, der von der Verbindungssteuerungsschicht 10 empfangene Protokollsteuerinformationen entkomprimiert und so eine Kompression gemäß dem zugeordneten Protokollsteuerinformations-Kompressionsalgorithmus rückgängig macht.

Ein erster PDP-Kontext 21 ist über einen ersten Zugriffspunkt 31 mit einem ersten Protokollsteuerinformations-Kompressionsalgorithmus 51 und einem zugeordneten ersten Protokollsteuerinformations-Entkompressionsalgorithmus 61 verbunden. Im folgenden werden die einander zugeordneten Kompressions- und Entkompressionsalgorithmen zur Vereinfachung der Beschreibung als eine Einheit betrachtet und stellvertretend durch den entsprechenden Kompressionsalgorithmus referenziert. So ist der erste Protokollsteuerinformations-Kompressionsalgorithmus 51 über einen ersten Datenkompressionsalgorithmus 41 mit einem zweiten Dienstzugangspunkt 82 verbunden. Der erste Protokollsteuerinformations-Kompressionsalgorithmus 51 ist außerdem über einen zweiten Datenkompressionsalgorithmus 42 mit dem zweiten Dienstzugangspunkt 82 verbunden.

Ein zweiter PDP-Kontext 22 ist über einen zweiten, ihm zugeordneten, Zugriffspunkt 32 mit einem dritten Datenkompressionsalgorithmus 43 verbunden, der ebenfalls an den zweiten Dienstzugangspunkt 82 angeschlossen ist. Ein dritter PDP-Kontext 23 ist über einen ihm zugeordneten dritten Zugriffspunkt 33 an einen fünften Protokollsteuerinformations-Kompressionsalgorithmus 55 angeschlossen, der über den dritten Datenkompressionsalgorithmus 43 an den zweiten Dienstzugangspunkt 82 angeschlossen ist. Ein vierter PDP-Kontext 24 ist über einen ihm zugeordneten vierten Zugriffspunkt 34 an einen zweiten Protokollsteuerinformations-Kompressionsalgorithmus 52 angeschlossen, der wiederum an einen dritten Dienstzugangspunkt 83 angeschlossen ist.

Ein fünfter PDP-Kontext 25 ist über einen ihm zugeordneten fünften Zugriffspunkt 35 einerseits mit einem dritten Protokollsteuerinformations-Kompressionsalgorithmus 53 und andererseits mit einem vierten Protokollsteuerinformations-Kompressionsalgorithmus 54 verbunden. Der dritte Protokollsteuerinformations-Kompressionsalgorithmus 53 und der vierte Protokollsteuerinformations-Kompressionsalgorithmus 54 sind jeweils mit einem vierten Datenkompressionsalgorithmus 44 verbunden, der ebenfalls an den dritten Dienstzugangspunkt 83 angeschlossen ist. Ein n-ter PDP-Kontext 26 ist über einen ihm zugeordneten n-ten Zugriffspunkt 36 ebenfalls an den dritten Dienstzugangspunkt 83 angeschlossen. n kann dabei für ein Endgerät wie beschrieben beispielhaft gleich 16 gewählt werden. Die restlichen PDP-Kontexte sind der Übersichtlichkeit halber in Figur 4 nicht dargestellt. Ein erster Dienstzugangspunkt 81 und ein vierter Dienstzugangspunkt 84 bleiben gemäß Figur 4 ungenutzt oder werden für die nicht in Figur 4 dargestellten PDP-Kontexte genutzt.

Gemäß Figur 4 sind somit stellvertretend sechs verschiedene Beispiele für die Anbindung der PDP-Kontexte 21, 22, 23, ..., 26 an die Verbindungssteuerungsschicht 10 beschrieben. Dabei tritt der Fall auf, daß z.B. dem ersten PDP-Kontext 21, dem dritten PDP-Kontext 23 und dem vierten PDP-Kontext 24 jeweils genau ein Protokollsteuerinformations-Kompressionsalgorithmus zugeordnet ist, wohingegen dem fünften PDP-Kontext 25 zwei Protokollsteuerinformations-Kompressionsalgorithmen zugeordnet sind. Andererseits ist dem zweiten PDP-Kontext 22, dem dritten PDP-Kontext 23 und dem fünften PDP-Kontext 25 jeweils genau ein Datenkompressionsalgorithmus zugeordnet, wohingegen dem ersten PDP-Kontext 21 zwei Datenkompressionsalgorithraen 41, 42 zugeordnet sind. Dem zweiten PDP-Kontext 22 und dem n-ten PDP-Kontext 26 ist kein Protokollsteuerinformations-Kompressionsalgorithmus zugeordnet. Dem vierten PDP-Kontext 24 und dem n-ten PDP-Kontext 26 ist kein Datenkompressionsalgorithmus zugeordnet.

Für den Fall, daß einem PDP-Kontext genau ein Protokollsteuerinformations-Kompressionsalgorithmus zugeordnet ist, kann die entsprechende Kennung PCOMP in der in der Konvergenzprotokollschicht 1 zusammengestellten Paketdateneinheit eingespart werden. Entsprechend kann für den Fall, daß einem PDP-Kontext genau ein Datenkompressionsalgorithmus zugeordnet ist, in der in der Konvergenzprotokollschicht 1 zusammengestellten Paketdateneinheit die entsprechende Kennung DCOMP eingespart werden.

So kann in einem ersten Beispiel gemäß Figur 6 eine erste Paketdateneinheit in der Konvergenzprotokollschicht 1 für den ersten PDP-Kontext 21 erzeugt werden, die im ersten Oktett die Kennung NSAPI für den ersten PDP-Kontext 21 und die Kennung DCOMP für den ersten Datenkompressionsalgorithmus 41 oder den zweiten Datenkompressionsalgorithmus 42 aufweist, je nach dem welcher der beiden Datenkompressionsalgorithmen 41, 42 für die Kompression der vom ersten PDP-Kontext 21 in der Konvergenzprotokollschicht 1 empfangenen Nutzdaten verwendet werden soll. Vom zweiten bis zum n-ten Oktett werden dann die Nutzdaten in der ersten Paketdateneinheit übertragen. Wird eine solche erste Paketdateneinheit in der Konvergenzprotokollschicht 1 von der Verbindungssteueurungsschicht 10 empfangen, so wird zunächst anhand der Kennung DCOMP der erste Datenentkompressionsalgorithmus 71 oder der zweite Datenentkompressionsalgorithmus 72 zur Entkompression der empfangenen Nutzdaten ausgewählt. Anschließend werden die Protokollsteuerinformationen der ersten Paketdateneinheit durch den ersten Protokollsteuerinformations-Entkompressionsalgorithmus 61 entkomprimiert, der dem ersten Zugriffspunkt 21 eindeutig zugeordnet ist. Anschließend werden die so entkomprimierten Nutzdaten und Protokollsteuerinformationen dem ersten PDP-Kontext 21 zugeführt.

Die Kennungen NSAPI, DCOMP und PCOMP sollen dabei jeweils beispielhaft als 4-bit-Wert und somit als halbes Oktett ausgebildet sein.

In der ersten Paketdateneinheit ist aufgrund der eindeutigen Zuordnung des ersten Protokollsteuerinformations-Kompressionsalgorithmus 51 zum ersten Zugriffspunkt 31 keine Kennung PCOMP erforderlich, so daß statt dessen für die Übertragung der Nutzdaten mehr Übertragungskapazität in der ersten Paketdateneinheit in Höhe von 4 Bit zur Verfügung steht.

Gemäß Fig. 7 ist ein zweites Beispiel für eine zweite Paketdateneinheit dargestellt, bei der sowohl die Kennung DCOMP als auch die Kennung PCOMP eingespart werden und nur die Kennung NSAPI mit der zweiten Paketdateneinheit übertragen wird, so daß weitere 4 Bit im Vergleich zur ersten Paketdateneinheit gemäß Fig. 6 zur Übertragung für Nutzdaten zur Verfügung stehen. Die Verwendung der zweiten Paketdateneinheit kann dabei für den zweiten PDP-Kontext 22, den dritten PDP-Kontext 23, den vierten PDP-Kontext 24 und den n-ten PDP-Kontext 26 vorgesehen werden, da diesen PDP-Kontexten genau ein Protokollsteuerinformations-kompressionsalgorithmus und/oder genau ein Datenkompressionsalgorithmus oder wie im Fall des n-ten PDP-Kontextes gar kein Kompressionsalgorithmus zugeordnet ist. Diese Zuordnung ist jeweils eindeutig, so daß keine Auswahl zwischen verschiedenen Datenkompressionsalgorithmen oder Protokollsteuerinformations-Kompressionsalgorithmen möglich ist, die einen Parameter zur Auswahl des gewünschten Kompressionsalgorithmus erfordern würde. Entsprechendes gilt für die Entkompression.

Gemäß Figur 8 ist ein drittes Beispiel für eine dritte Paketdateneinheit dargestellt, die für den fünften PDP-Kontext 25 vorgesehen werden kann. Die dritte Paketdateneinheit ist dabei wie die erste Paketdateneinheit gemäß Fig. 6 aufgebaut und umfaßt anstelle der Kennung DCOMP der Figur 6 die Kennung PCOMP, da dem fünften PDP-Kontext 25 zwei verschiedene Protokollsteuerinformations-Kompressionsalgorithmen 53, 54 zugeordnet sind, jedoch nur genau ein Datenkompressionsalgorithmus 44, so daß die Kennung DCOMP entfallen kann, jedoch die Kennung PCOMP erforderlich wird, um eine Auswahl des dritten Protokollsteuerinformations-Kompressionsalgorithmus 53 oder des vierten Protokollsteuerinformations-Kompressionsalgorithmus 54 für die zu komprimierenden Protokollsteuerinformationen des fünften PDP-Kontextes 25 zur Verfügung zu stellen. Entsprechendes gilt für die Entkompression.

Anhand der Kennung PCOMP erkennt die Konvergenzprotokollschicht 1, nach welchem der beiden Protokollsteuerinformations-Entkompressionsalgorithmen 63, 64 die von der Verbindungssteuerungsschicht 10 für den fünften PDP-Kontext 25 in einer entsprechenden Paketdateneinheit empfangenen Protokollsteuerinformationen entkomprimiert werden müssen, wobei aufgrund der eindeutigen Zuordnung des vierten Datenkompressionsalgorithmus 44 zum fünften PDP-Kontext 25 eine Entkompression der in derselben Paketdateneinheit empfangenen Nutzdaten zwangsläufig in der vierten Datenentkompressionseinheit 74 erfolgt, ohne daß dafür die Kennung DCOMP erforderlich ist.

Bei allen sechs beschriebenen Kontexten 21, 22, ..., 26 ist also der Übertragungsweg der Paketdateneinheiten zwischen einem der Dienstzugangspunkte 81, 82, 83, 84 und einem der Zugriffspunkte 31, 32, ..., 36 zumindest bezüglich einer Kategorie von Kompressions- oder Entkompressionsalgorithmus eindeutig, wobei die Kompressions- und Entkompressionsalgorithmen dahingehend als kategorisiert zu betrachten sind, daß sie entweder zur Kompression oder Entkompression von Protokollsteuerinformationen oder zur Kompression oder Entkompression von Nutzdaten vorgesehen sind.

Für den zweiten PDP-Kontext 22, den dritten PDP-Kontext 23 und den vierten PDP-Kontext 24 ist der Übertragungsweg der Paketdateneinheiten zwischen einem der Dienstzugangspunkte 81, 82, 83, 84 und einem der Zugriffspunkte 31, 32, ..., 36 sogar bezüglich beiden Kategorien von Kompressions- und Entkompressionsalgorithmen eindeutig, also sowohl bezüglich der Protokollsteuerinformationen als auch bezüglich der Nutzdaten. Dies gilt auch für den n-ten PDP-Kontext, wobei dieser jedoch einen Spezialfall aufgrund der fehlenden Kompression bzw. Entkompression darstellt. Bezüglich dem zweiten PDP-Kontext 22, dem dritten PDP-Kontext 23, dem vierten PDP-Kontext 24 und dem n-ten PDP-Kontext 26 läßt sich somit sagen, daß gemäß dieser Erfindung eine Baumstruktur in der Konvergenzprotokollschicht 1 vorgeschlagen wird, die Verzweigungen von einem Dienstzugangspunkt zu mehreren Kompressionseinheiten oder Entkompressionseinheiten der gleichen Kategorie und von einer Kompressionseinheit oder Entkompressionseinheit zu mehreren Zugriffspunkten zuläßt. So könnte bspw. in Abwandlung von Figur 4 auch der zweite Protokollsteuerinformations-Kompressionsalgorithmus 52 an den zweiten Dienstzugangspunkt 82 angeschlossen sein.

Eine Verzweigung von einem Zugriffspunkt zu mehreren Kompressionseinheiten oder Entkompressionseinheiten der gleichen Kategorie und von einer Kompressionseinheit oder Entkompressionseinheit zu mehreren Dienstzugangspunkten führt jedoch dazu, daß auch die Kennung DCOMP oder PCOMP erforderlich wird. Für den zweiten PDP-Kontext 22, den dritten PDP-Kontext 23, den vierten PDP-Kontext 24 und den n-ten PDP-Kontext 26 gibt es nur einen Weg zwischen einem der Dienstzugangspunkte 81, 82, 83, 84 und einem der Zugriffspunkte 31, 32, ..., 26. Beim zweiten PDP-Kontext 22, beim dritten PDP-Kontext 23, beim vierten PDP-Kontext 24 und beim n-ten PDP-Kontext 26 sind mit der Kennung NSAPI auch der zu verwendende Protokollsteuerinformations-Kompressions-/-Entkompressionsalgorithmus und/oder der zu verwendende Datenkompressions-/-Entkompressionsalgorithmus festgelegt.

Die Datenpakete oder Paketdateneinheiten gemäß den Figuren 6, 7 und 8 werden dabei wie das Datenpaket bzw. die Paketdateneinheit gemäß Figur 5 in der Konvergenzprotokollschicht 1 für von der Netzwerkschicht 5 zu sendende Nutzdaten erstellt und für von der Verbindungssteuerungsschicht 10 empfangene Nutzdaten für die Auswahl der erforderlichen Entkompressionsalgorithmen in der beschriebenen Weise ausgewertet, wobei die Nutzdaten von der Verbindungssteuerungsschicht 10 in Form der beschriebenen Paketdateneinheiten empfangen werden.

Das genannte Endgerät kann beispielsweise als Mobilstation ausgebildet sein. Bei der Mobilstation kann es sich beispielsweise um ein Mobiltelefon handeln.

Die beschriebenen Schichten sind sowohl in einem Empfänger als auch in einem Sender vorgesehen, so daß eine erste Konvergenzprotokollschicht gemäß Figur 4 im Endgerät und eine zweite Konvergenzprotokollschicht gemäß Figur 4 in einer Basisstation des Mobilfunknetzes angeordnet sein können und Paketdateneinheiten in der beschriebenen Form zwischen diesen beiden Konvergenzprotokollschichten ausgetauscht werden können, wobei die beiden Konvergenzprotokollschichten in derselben Protokoll- oder Schichtebene des beschriebenen Protokoll- oder Schichtmodells liegen.

Beim UMTS-Mobilfunksystem werden die Protokollsteuerinformations-Kompressionsalgorithmen jeweils auch als Header Compression Entity bezeichnet.

## Patentansprüche

1. Verfahren zum Betreiben eines Mobilfunknetzes, in dem Daten durch eine erste Konvergenzprotokollschicht (1) vor dem Übertragen an eine zweite Konvergenzprotokollschicht zu mindestens einer ersten Einheit, zusammengesetzt werden,
wobei die Daten von einem Nutzer (21, 22, 23, 24, 25, 26) in einer Netzwerkschicht (5) an die erste Konvergenzprotokollschicht (1) geliefert werden,
wobei jedem Nutzer (21, 22, 23, 24, 25, 26) mindestens ein Zugriffspunkt (31, 32, 33, 34, 35, 36) zugeordnet wird, über den der Nutzer (21, 22, 23, 24, 25, 26) die Dienste der ersten Konvergenzprotokollschicht (1) nutzt, **dadurch gekennzeichnet,**
**dass** jedem Zugriffspunkt (31, 32, 33, 34, 35, 36) genau ein Datenkompressionsalgorithmus (43, 44) und/oder genau ein Protokollsteuerinformationskompressionsalgorithmus (51, 52) in der ersten Konvergenzprotokollschicht (1) zugeordnet wird,
wobei die vom Nutzer (21, 22, 23, 24, 25, 26) gelieferten Daten gemäß dem zugeordneten Datenkompressionsalgorithmus (41, 42, 43', 44) und/oder mit den Daten gelieferte oder für die Daten erzeugte Protokollsteuerinformationen gemäß dem zugeordneten Protokollsteuerinformationskompressionsalgorithmus (51, 52, 53, 54, 55) in der ersten Konvergenzprotokollschicht (1) komprimiert werden,
**dass** bei genau einem Datenkompressionsalgorithmus (43, 44) und/oder genau einem Protokollsteuerinformationskompressionsalgorithmus (51, 52) pro Zugriffspunkt (31, 32, 33, 34, 35, 36) durch Angabe der Kennung (NSAPI) des Zugriffspunktes (31, 32, 33, 34, 35, 36) der zu verwendende Datenkompressionsalgorithmus (43, 44) und/oder der zu verwendende Protokollsteuerinformationskompressionsalgorithmus (51, 52) festliegt,
**dass** mit der mindestens einen ersten Einheit eine Kennung (NSAPI) mindestens eines Zugriffspunktes (31, 32, 33, 34, 35, 36) übertragen wird,
**dass** bei mehreren Datenkompressionsalgorithmen (43, 44) pro Zugriffspunkt (31, 32, 33, 34, 35, 36) zusätzlich eine Kennung (DCOMP), die den für die Kompression der Daten verwendeten Datenkompressionsalgorithmus (41, 42) und bei mehreren Protokollsteuerinformationskompressionsalgorithmen (51, 52) pro Zugriffspunkt (31, 32, 33, 34, 35, 36) zusätzlich eine Kennung (PCOMP), die den für die Kompression der Protokollsteuerinformationen verwendeten Protokollsteuerinformationskompressionsalgorithmus (53, 54) anzeigt, mit der ersten Einheit übertragen wird,
**dass** die so komprimierten Daten und/oder Protokollsteuerinformationen zu der mindestens einen ersten Einheit zusammengesetzt werden,
wobei für den dem mindestens einen Zugriffspunkt (31, 32, 33, 34, 35, 36) eindeutig zugeordneten genau einen Datenkompressionsalgorithmus und/oder den dem mindestens einen Zugriffspunkt (31, 32, 33, 34, 35, 36) eindeutig zugeordneten Protokollsteuerinformationskompressionsalgorithmus (51, 52) keine eigene Kennung (PCOMP, DCOMP) übertragen wird.

2. Verfahren nach Anspruch 1, **dadurch gekennzeichnet, dass** mindestens einem Protokollsteuerinformationskompressionsalgorithmus (53, 54) ein Protokollsteuerinformationsentkompressionsalgorithmus (63, 64) zugeordnet wird, durch den von einer Verbindungssteuerungsschicht empfangene Protokollsteuerinformationen, die mit Daten in einer zweiten Einheit zusammengefaßt sind, in der ersten Konvergenzprotokollschicht (1) entkomprimiert werden,
wenn mit der zweiten Einheit eine Kennung (PCOMP) übertragen wird, wonach die empfangenen Protokollsteuerinformationen durch den mindestens einen Protokollsteuerinformationskompressionsalgorithmus (53, 54) komprimiert wurden.

3. Verfahren nach Anspruch 1, oder 2, **dadurch gekennzeichnet, dass** mindestens einem Protokollsteuerinformationskompressionsalgorithmus (51, 52, 53, 54, 55) ein Protokollsteuerinformationsentkompressionsalgorithmus (61, 62, 63, 64) zugeordnet wird, durch den von einer Verbindungssteuerungsschicht (10) empfangene Protokollsteuerinformationen, die mit Daten in einer zweiten Einheit zusammengefasst sind, in der ersten Konvergenzprotokollschicht (1) entkomprimiert werden, wenn mit der zweiten Einheit eine Kennung (NSAPI) eines Zugriffspunktes (31, 32, 33, 34, 35, 36) übertragen wird, der unter den Protokollsteuerinformationskompressionsalgorithmen (51, 52, 53, 54, 55) nur dem mindestens einen Protokollsteuerinformationskompressionsalgorithmus (51, 52) zugeordnet ist.

4. Verfahren nach Anspruch 1, **dadurch gekennzeichnet, dass** mindestens einem Datenkompressionsalgorithmus (41, 42) ein Datenentkompressionsalgorithmus (71, 72) zugeordnet wird, durch den von einer Verbindungssteuerungsschicht empfangene Daten, die in einer zweiten Einheit zusammengefasst sind, in der ersten Konvergenzprotokollschicht (1) entkomprimiert werden, wenn mit der zweiten Einheit eine Kennung (DCOMP) übertragen wird, wonach die empfangenen Daten durch den mindestens einen Datenkompressionsalgorithmus (41, 42) komprimiert wurden.

5. Verfahren nach einem der Ansprüche 1 bis 4, **dadurch gekennzeichnet, dass** mindestens einem Datenkompressionsalgorithmus (41, 42, 43, 44) ein Datenentkompressionsalgorithmus (71, 72, 73, 74) zugeordnet wird, durch den von einer Verbindungssteuerungsschicht (10) empfangene Daten, die in einer zweiten Einheit zusammengefasst sind, in der ersten Konvergenzprotokollschicht (1) entkomprimiert werden, wenn mit der zweiten Einheit eine Kennung (NSAPI) eines Zugriffspunktes (31, 32, 33, 34, 35, 36) übertragen wird, der unter den Datenkompressionsalgorithmen (41, 42, 43, 44) nur dem mindestens einen Datenkompressionsalgorithmus (43, 44) zugeordnet ist.

6. Verfahren nach einem der vorhergehenden Ansprüche, **dadurch gekennzeichnet, dass** die erste und die zweite Konvergenzprotokollschicht auf derselben Protokollebene sind.

7. Verfahren nach einem der vorhergehenden Ansprüche, **dadurch gekennzeichnet, dass** die erste Einheit (11, 12, 13, 14) eine Paketdateneinheit ist.

8. Verfahren zum Betreiben eines GPRS-_Systems, wobei ein Verfahren nach einem der vorherigen Ansprüche angewendet wird und wobei die erste Konvergenzprotokollschicht (1) und die zweite Konvergenzprotokollschicht Schichten in mindestens einer Mobilstation und/_oder im Mobilfunknetz sind.

9. Verfahren nach Anspruch 8, **dadurch gekennzeichnet, dass** der GSM-_Standard oder der UMTS-_Standard angewendet wird.

## Claims

1. Method of operating a mobile radio network, in which data are assembled to form at least one first unit by a first convergence protocol layer (1) before being transferred to a second convergence protocol layer, the data being supplied to the first convergence protocol layer (1) by a user (21, 22, 23, 24, 25, 26) in a network layer (5), each user (21, 22, 23, 24, 25, 26) being assigned at least one access point (31, 32, 33, 34, 35, 36), via which the user (21, 22, 23, 24, 25, 26) uses the services of the first convergence protocol layer (1), **characterized in that** each access point (31, 32, 33, 34, 35, 36) is assigned precisely one data compression algorithm (43, 44) and/or precisely one protocol control information compression algorithm (51, 52) in the first convergence protocol layer (1), the data supplied by the user (21, 22, 23, 24, 25, 26) being compressed according to the assigned data compression algorithm (41, 42, 43, 44) and/or protocol control information supplied with the data or generated for the data being compressed according to the assigned protocol control information compression algorithm (51, 52, 53, 54, 55) in the first convergence protocol layer (1), **in that** in the case of precisely one data compression algorithm (43, 44) and/or precisely one protocol control information compression algorithm (51, 52) for each access point (31, 32, 33, 34, 35, 36), specifying the identifier (NSAPI) of the access point (31, 32, 33, 34, 35, 36) has the effect of fixing the data compression algorithm (43, 44) to be used and/or the protocol control information compression algorithm (51, 52) to be used, **in that** an identifier (NSAPI) of at least one access point (31, 32, 33, 34, 35, 36) is transmitted with the at least one first unit, **in that** an identifier (DCOMP) which indicates the data compression algorithm (41, 42) used for the compression of the data is additionally transmitted with the first unit in the case of a number of data compression algorithms (43, 44) for each access point (31, 32, 33, 34, 35, 36), and an identifier (PCOMP) which indicates the protocol control information compression algorithm (53, 54) used for the compression of the protocol control information is additionally transmitted with the first unit in the case of a number of protocol control information compression algorithms (51, 52) for each access point (31, 32, 33, 34, 35, 36), **in that** the data and/or protocol control information compressed in this way are assembled to form the at least one first unit with no dedicated identifier (PCOMP, DCOMP) being transmitted for the precisely one data compression algorithm uniquely assigned to the at least one access point (31, 32, 33, 34, 35, 36) and/or for the protocol control information compression algorithm (51, 52) uniquely assigned to the at least one access point (31, 32, 33, 34, 35, 36).

2. Method according to Claim 1, **characterized in that** at least one protocol control information compression algorithm (53, 54) is assigned a protocol control information decompression algorithm (63, 64), by which protocol control information received from a link control layer and combined with data in a second unit are decompressed in the first convergence protocol layer (1) if an identifier (PCOMP) according to which the protocol control information received were compressed by the at least one protocol control information compression algorithm (53, 54) is transmitted with the second unit.

3. Method according to Claim 1 or 2, **characterized in that** at least one protocol control information compression algorithm (51, 52, 53, 54, 55) is assigned a protocol control information decompression algorithm (61, 62, 63, 64), by which protocol control information received from a link control layer (10) and combined with data in a second unit are decompressed in the first convergence protocol layer (1) if an identifier (NSAPI) of an access point (31, 32, 33, 34, 35, 36) which among the protocol control information compression algorithms (51, 52, 53, 54, 55) is assigned only to the at least one protocol control information compression algorithm (51, 52) is transmitted with the second unit.

4. Method according to Claim 1, **characterized in that** at least one data compression algorithm (41, 42) is assigned a data decompression algorithm (71, 72), by which data received from a link control layer and assembled in a second unit are decompressed in the first convergence protocol layer (1) if an identifier (DCOMP) according to which the data reveived were compressed by the at least one data compression algorithm (41, 42) is transmitted with the second unit.

5. Method according to one of Claims 1 to 4, **characterized in that** at least one data compression algorithm (41, 42, 43, 44) is assigned a data decompression algorithm (71, 72, 73, 74), by which data received from a link control layer (10) and assembled in a second unit are decompressed in the first convergence protocol layer (1) if an identifier (NSAPI) of an access point (31, 32, 33, 34, 35, 36) which among the data compression algorithms (41, 42, 43, 44) is assigned only to the at least one data compression algorithm (43, 44) is transmitted with the second unit.

6. Method according to one of the preceding claims, **characterized in that** the first and the second convergence protocol layer are on the same protocol plane.

7. Method according to one of the preceding claims, **characterized in that** the first unit (11, 12, 13, 14) is a packet data unit.

8. Method for operating a GPRS system, a method according to one of the preceding claims being used and the first convergence protocol layer (1) and the second convergence protocol layer being layers in at least one mobile station and/or in the mobile radio network.

9. Method according to Claim 8, **characterized in that** the GSM standard or the UMTS standard is used.

## Revendications

1. Procédé de gestion d'un réseau de téléphonie mobile dans lequel des données sont rassemblées par une première couche de protocole de convergence (1) avant la transmission à une deuxième couche de protocole de convergence vers au moins une première unité, les données étant fournies à la première couche de protocole de convergence (1) par un utilisateur (21, 22, 23, 24, 25, 26) dans une couche de réseau (5), au moins un point d'accès (31, 32, 33, 34, 35, 36) par lequel l'utilisateur (21, 22, 23, 24, 25, 26) utilise les services de la première couche de protocole de convergence (1) étant alloué à chaque utilisateur (21, 22, 23, 24, 25, 26),
**caractérisé en ce**
**qu'**exactement un algorithme de compression de données (43, 44) et/ou exactement un algorithme de compression d'informations de commande de protocole (51, 52) est alloué à chaque point d'accès (31, 32, 33, 34, 35, 36) dans la première couche de protocole de convergence (1), les données fournies par l'utilisateur (21, 22, 23, 24, 25, 26) étant comprimées selon l'algorithme alloué de compression de données (41, 42, 43, 44) et/ou les informations de commande de protocole fournies avec les données ou générées pour les données étant comprimées selon l'algorithme alloué de compression d'informations de commande de protocole (51, 52, 53, 54, 55), dans la première couche de protocole de convergence (1),
en ce que dans le cas d'exactement un algorithme de compression de données (43, 44) et/ou d'exactement un algorithme de compression d'informations de commande de protocole (51, 52) par point d'accès (31, 32, 33, 34, 35, 36), l'algorithme de compression de données (43, 44) à utiliser et/ou l'algorithme de compression d'informations de commande de protocole (51, 52) à utiliser sont établis par l'indication d'un indicatif (NSAPI) du point d'accès (31, 32, 33, 34, 35, 36),
en ce qu'un indicatif (NSAPI) d'au moins un point d'accès (31, 32, 33, 34, 35, 36) est transmis avec l'au moins une première unité,
en ce que dans le cas de plusieurs algorithmes de compression de données (43, 44) par point d'accès (31, 32, 33, 34, 35, 36), en outre, un indicatif (DCOMP), qui indique l'algorithme de compression de données (41, 42) utilisé pour la compression des données, et dans le cas de plusieurs algorithmes de compression d'informations de commande de protocole (51, 52) par point d'accès (31, 32, 33, 34, 35, 36), en outre, un indicatif (PCOMP), qui indique l'algorithme de compression d'informations de commande de protocole (53, 54) utilisé pour la compression des informations de commande de protocole, est transmis avec la première unité,
en ce que les données et/ou les informations de commande de protocole ainsi comprimées sont rassemblées pour former l'au moins une première unité,
et pour l'exactement un algorithme de compression de données alloué univoquement à l'au moins un point d'accès (31, 32, 33, 34, 35, 36) et/ou pour l'algorithme de compression d'informations de commande de protocole (51, 52) alloué univoquement à l'au moins un point d'accès (31, 32, 33, 34, 35, 36), aucun indicatif propre (PCOMP, DCOMP) n'étant transmis.

2. Procédé selon la revendication 1,
**caractérisé en ce**
**qu'**à au moins un algorithme de compression d'informations de commande de protocole (53, 54) on alloue un algorithme de décompression d'informations de commande de protocole (63, 64) grâce auquel des informations de commande de protocole, reçues par une couche de commande de liaison et rassemblées avec des données dans une deuxième unité, sont décomprimées dans la première couche de protocole de convergence (1) lorsqu'un indicatif (PCOMP) est transmis avec la deuxième unité, à la suite de quoi les informations de commande de protocole reçues sont comprimées par l'au moins un algorithme de compression d'informations de commande de protocole (53, 54).

3. Procédé selon la revendication 1 ou 2,
**caractérisé en ce**
**qu'**à au moins un algorithme de compression d'informations de commande de protocole (51, 52, 53, 54, 55) on alloue un algorithme de décompression d'informations de commande de protocole (61, 62, 63, 64) grâce auquel des informations de commande de protocole, reçues par une couche de commande de liaison (10) et rassemblées avec des données dans une deuxième unité, sont décomprimées dans la première couche de protocole de convergence (1) lorsqu'un indicatif (NSAPI) d'un point d'accès (31, 32, 33, 34, 35, 36) est transmis avec la deuxième unité, qui parmi les algorithmes de compression d'informations de commande de protocole (51, 52, 53, 54, 55) n'est alloué qu'à l'au moins un algorithme de compression d'informations de commande de protocole (51, 52).

4. Procédé selon la revendication 1,
**caractérisé en ce**
**qu'**à au moins un algorithme de compression de données (41, 42) on alloue un algorithme de décompression de données (71, 72) grâce auquel des données reçues par une couche de commande de liaison et rassemblées dans une deuxième unité, sont décomprimées dans la première couche de protocole de convergence (1) lorsqu'un indicatif (DCOMP) est transmis avec la deuxième unité, après quoi les données reçues sont comprimées par l'au moins un algorithme de compression de données (41, 42).

5. Procédé selon l'une quelconque des revendications 1 à 4,
**caractérisé en**
**qu'**à au moins un algorithme de compression de données (41, 42, 43, 44) on alloue un algorithme de décompression de données (71, 72, 73, 74) grâce auquel des données reçues par une couche de commande de liaison (10) et rassemblées dans une deuxième unité, sont décomprimées dans la première couche de protocole de convergence (1) lorsque, avec la deuxième unité, un indicatif (NSAPI) d'un point d'accès (31, 32, 33, 34, 35, 36) est transmis qui, parmi les algorithmes de compression de données (41, 42, 43, 44) n'est alloué qu'à l'au moins un algorithme de compression de données (43, 44).

6. Procédé selon l'une quelconque des revendications précédentes,
**caractérisé en ce que**
la première et la deuxième couches de protocole de convergence sont au même niveau de protocole.

7. Procédé selon l'une quelconque des revendications précédentes
**caractérisé en ce que**
la première unité (11, 12, 13, 14) est une unité de données en paquets.

8. Procédé permettant le fonctionnement d'un système GPRS,
dans lequel
on utilise un procédé selon l'une quelconque des revendications précédentes, la première couche de protocole de convergence (1) et la deuxième couche de protocole de convergence étant des couches dans au moins une station mobile et/ou dans le réseau de téléphonie mobile.

9. Procédé selon la revendication 8,
**caractérisé en ce**
**qu'**on utilise le standard GSM ou le standard UMTS.
